# EUROPEAN PATENT APPLICATION

(11) **EP 2 216 381 A1**
(43) Date of publication of application: **11.08.2010**
(21) Application number: 09151875.3
(22) Date of filing: 02.02.2009
(51) Int. Cl.: C09J 5/00, C08J 5/12

(54) **Adhesion of surfaces**

(71) Applicant: Advansa Sasa Polyester Sanay A.S., 34330 Istanbul (TR)
(72) Inventor: Baykam, Can, 34730, Istanbul (TR); Kucukaltun, Engin, 01280, Adana (TR)
(74) Representative: Larsson, Malin

(57) **Abstract**

The invention relates to a method for adhering surfaces comprising the steps of: bringing a first polymer material, comprising a first polymer selected from the group consisting of polyesters and polyamides, said first polymer having at least one double bond in the backbone, in contact with a second polymer material, comprising a second polymer; and allowing a surface of the first polymer material and a surface of the second polymer material to adhere by chemical binding, in which binding said double bond(s) of the first polymer are involved.

## Description

### Technical field of the invention

The present invention relates to a method for adhering surfaces. The invention further relates to the use of a polymer selected from polyesters or polyamides, for adhering surfaces, and yet furthers a method for producing a reinforced polymer device.

### Background art

Adhering surfaces of polymers is very common in the industry, including in the preparation of packages and laminates, and in reinforcement of polymer devices, such as tyres and belts such as conveyor belts. Adhering of surfaces of polymers is often achieved by gluing the surfaces together, by applying glue on one or both surfaces, followed by contacting the surfaces. In the manufacturing of tyres, reinforcing fibres are dipped one or several times in a dipping solution, after which the fibres are brought in contact with the rubber of the tyre or the belts. Such techniques of adhering surfaces include long and complicated processing, and risks of weak products due to the adhesive.

### Summary of the invention

One purpose of the present invention relates to providing a method which is well suited and efficient for adhering of surfaces. Another purpose of the present invention relates to the use of a polymer for efficient adhering of surfaces. Yet another purpose of the present invention relates to efficient production of a reinforced polymer device. The production of tyres of reinforced polymer material is another purpose of the present invention, and so is producing conveyor belts of reinforced polymer material.

According to a first aspect, the present invention relates to a method for adhering surfaces comprising the steps of: bringing a first polymer material, comprising a first polymer selected from the group consisting of polyesters and polyamides, said first polymer having at least one double bond in the backbone, in contact with a second polymer material, comprising a second polymer; allowing a surface of the first polymer material and a surface of the second polymer material to adhere by chemical binding, in which binding said double bond(s) of the first polymer are involved.

Bringing a first polymer material in contact with a second polymer material may be efficient for allowing the two polymer materials to adhere. It may be efficient for the first material to comprise double bonds, as double bonds may be efficient in the adhering of the surfaces. Bringing the first polymer material in contact with the second polymer material may further be efficient for bringing in contact surfaces of said polymer materials. According to the present invention, polymer material can thus be adhered without the need for adhesives or dipping solutions. The at least one double bond of the first polymer may be efficient for the chemical binding between the surfaces. The chemical binding of the surfaces may, for example, be predetermined by means of the number of double bonds or the position of the double bonds of the first polymer. The chemical binding may, for example, be the forming of a covalent bond from reaction of said double bond(s) of the first polymer material and the second polymer material. Other bonds than covalent bonds, or interactions, between the polymer materials may also exist or be formed, for example ionic bonds, dipole interactions, hydrogen bonds, or Pi-interactions. Combinations of two or more of different types of bonds or interaction may exist, according to the invention.

According to the invention, the first polymer may comprise a structural element described by structural formula 1:

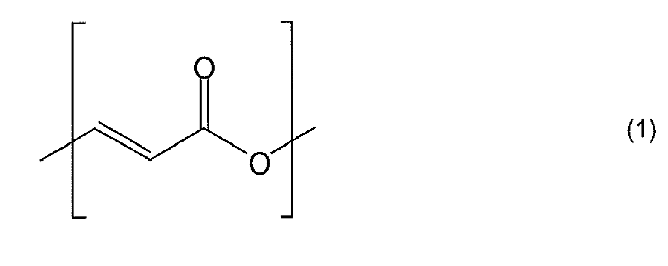

According to the invention, the first polymer may comprise a structural element described by structural formula 2:

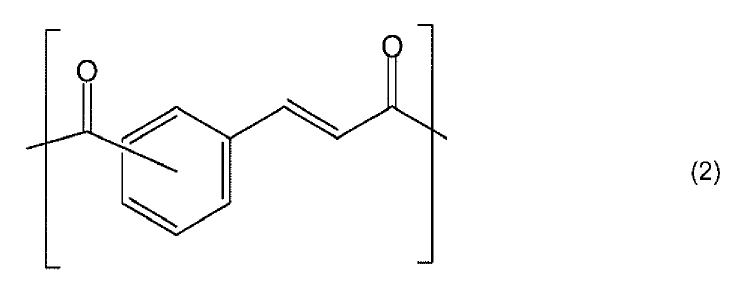

Further, according to the invention, the first polymer may comprise a structural element described by structural formula 3:

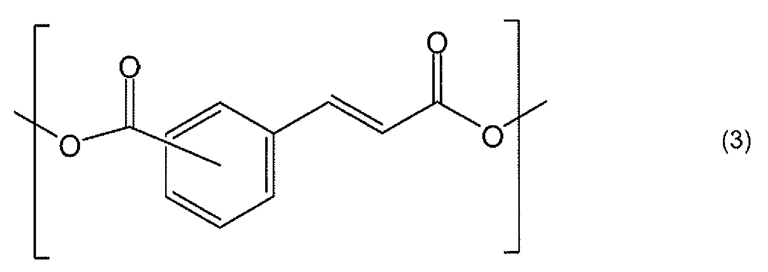

The structural formula 3 is relevant, for example, for polyesters according to the invention.

The polymer from the step of melt polymerisation may comprises a structural element described by structural formula 4:

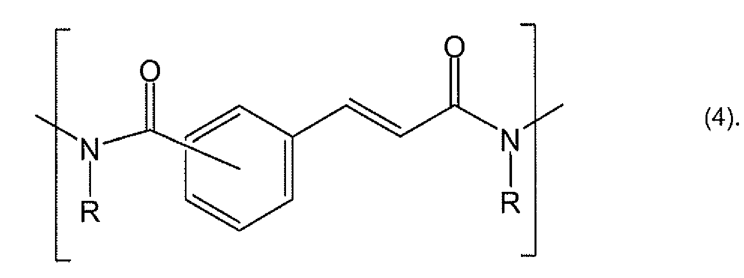

The structural formula 4 may be relevant, for example, for polyamides according to the invention. A group indicated by R, may for the case of structural formula 4, be a hydrogen atom, but it may be another atom or group which is suitable for the invention. The R to the left may indicate a different atom or group than the R to the right, or an identical group.

The discussions above regarding structural formula 2 are, where applicable, also relevant for structural formulas 3 or 4.

The structural formulas 1, 2, 3 or 4 may bring at least one double bond(s) into the back-bone of the first polymer. The bond between the carbonyl carbon and the benzene ring of structural formula 2, 3, or 4 may be linked to any suitable non-occupied carbon of the benzene ring. Thus, with respect to the acrylic group of the structural formula 2, 3, or 4, the bond between the carbonyl carbon and the benzene ring may be in ortho-, meta-, or para-position, It is preferred that the position is meta or para. The double bond of the acrylic group may be reactive towards groups of said second polymer, and thus bond(s) may be formed between the first and the second polymers. It should be understood that in discussions concerning reactions including double bonds, for example the reactions between reactive groups and double bonds, it may well be that the double bond is converted to a single bond during the reaction. Therefore the double bond may cease to exist during the reaction. However, even though a double bond may have ceased to exist during the reaction references may be made in the discussions, e.g. to a bond between a group and that double bond.

The first polymer may comprise a structural element described by structural formula 1, 2, 3, or 4, or a mixture of the four, which structural element(s) is present between 0 and 20 percent by weight of the first polymer. For example, the structural element(s) may be present at Y-20, Y-10, Y-5, Y-2, Y-1, or Y-0.1% by weight of the first polymer, whereby Y ranges from 0.01 to 0.1%, for example, 0.01, 0.025, 0.05, 0.075, or 0.1%.

The structural formula 1,2 or 3 may be comprised in a monomer or co-monomer of the first and/or the second polymer, according to the invention. The co-monomer may be defined by the structural formula 5, wherein R₁ and R₂ may be selected independently from the group comprising H, methyl, ethyl, propyl, butyl, CH₃, C₂H₅, C₃H₇, C₄H₉. The first polymer may be made from comonomers described by the structural formula 5.

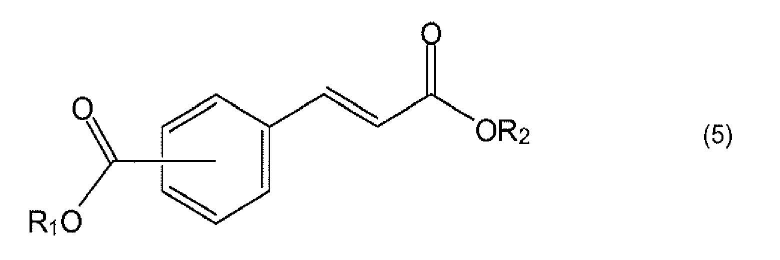

The discussions above regarding structural formula 1, 2, 3, or 4 are, where applicable, also relevant for structural formula 5.

The second polymer may comprise reactive groups selected from the group consisting of amines, alcohols, hydroxides, peroxides, and sulphides. Said reactive groups may be involved in the chemical binding. Said reactive groups may react with the double bond(s) of the first polymer.

The chemical binding, according to the present invention may be initiated by a radical initiator, direct heat, or UV light. A radical initiator or UV-light may be used, for example, for initiating reactions between the double bond(s) of the first polymer and the second polymer. The reaction may involve reactive group(s) of the second polymer. The UV-light may for example comprise light with wavelengths between 100 nm and 400 nm, but UV light may also be considered to comprise other wavelengths, which may be used according to the invention. Other wavelengths than wavelengths comprised by UV light may also be suitable for the invention and may be used according to the invention.

The radical initiator may be selected from the group comprising: halogen molecules; azo compounds, comprising for example AIBN and ABCN; and organic peroxides, for example di-t(tertiary)-butylperoxide, Benzoyl peroxide, Methyl ethyl ketone peroxide, and acetone peroxide. Other radical initiators comprising the groups R-N=N-R', or R"-O-O-R"', that are useful according to the invention may be included in the group. The R, R', R", and R"' groups are suitable groups, which may be hydrocarbon groups, for example aliphatic groups. The radical initiator may be selected from the group comprising dibenzoylperoxide, t-butylhydroperoxide, lauroyl peroxide, di-t-butylperoxide, 2,5-dimethyl-2,5-di(t-butylperoxy)hexane, t-butylperbenzoate, 1,1,3,3-tetramethylbutyl hydroperoxide, 2,5-dimethyl-2,5-di(t-butylperoxy) hexane, 2,5-dimethylhexyl 2,5-diperoxybenzoate, and combinations thereof. Other suitable initiators may also be used for the purpose. Dibenzoylperoxide or lauroyl peroxide may be preferred.

According to the present invention, other types of chemical binding may be used than chemical binding initiated by a radical initiator, or UV light. For example addition reactions, such as cationic additions may be used.

According to the invention, the radical initiator may be arranged on at least one of the surfaces of the first polymer material and/or the surface of the second polymer material, followed by bringing the surfaces together. Such an arrangement of the radical initiator may result in good contact between the radical initiator and the polymers which are involved in reactions initiated by the radical initiator, and thus efficient chemical binding between the polymers may occur. Thus efficient adhering may occur. The radical initiator may be arranged at the surface for example by painting, spraying, through vapour deposition, or combinations thereof.

The first polymer and the second polymer may be identical or of similar or of non-identical types.

According to a second aspect, the invention relates to a polymer selected from polyesters or polyamides, comprising a structural element described by any of the structures 1 to 4 which polymer may be used for adhering surfaces. Such a polymer may be efficient in the adhering of surfaces, for example for reasons discussed above.

The use of a polymer according to the second aspect of the invention, may be efficient for chemical binding with another polymer, which binding involves the structural element described by any of the structures 1 to 4 thereby efficiently adhering the polymers.

The invention comprises material obtainable by the methods for adhering surfaces, according to the first aspect of the invention. Such materials, thus, may comprise two efficiently and/or strongly adhered polymer materials.

According to a third aspect, the invention relates to a method aimed at producing a reinforced polymer device, wherein the first polymer material is reinforcing fibres and the second polymer material is a polymer device comprising polymers which may be selected from the group consisting of natural rubber, SBR, EPDM, acrylic rubber, butadiene rubber, butyl rubber, chlorobytyl, chlorinated polyethylene, chlorosulphonated polyethylene, epichlorhydrin, ethylene acrylic, ethylene propylene rubber, fluoroelastomers, hydrogenated nitrile rubber, isoprene rubber, nitrile rubber, perfluoro elastomers, polychloroprene, polynorbornene rubber, polysulphide rubber, polyurethande rubber, silicon rubber, fluorosilicone rubber, styrene butadiene rubber, and tetra-fluoroethylene/propylene, and combinations thereof.

Such a method may comprise the steps of: bringing an initiator in contact with at least one of reinforcing fibres comprising a polymer with double bonds in the backbone, and a polymer device comprising polymers selected from the group consisting of natural rubber, SBR, EPDM, acrylic rubber, butadiene rubber, butyl rubber, chlorobytyl, chlorinated polyethylene, chlorosulphonated polyethylene, epichlorhydrin, ethylene acrylic, ethylene propylene rubber, fluoroelastomers, hydrogenated nitrile rubber, isoprene rubber, nitrile rubber, perfluoro elastomers, polychloroprene, polynorbornene rubber, polysulphide rubber, polyurethande rubber, silicon rubber, fluorosilicone rubber, styrene butadiene rubber, and tetra-fluoroethylene/propylene, and combinations thereof, and allowing the polymer device and the reinforcing fibres to adhere at their interface, by means of chemical binding, in which said double bonds are involved. The radical initiator may efficiently initiate the chemical binding, as the radical initiator is brought in contact with at least one of the reinforcing fibres and the polymer device.

The reinforcing fibres may comprise a polymer selected from the group comprising polyester and polyamide. The polymer may, for example, comprise PA 4.6, PA 6, PA 6.6, PET, PEH, or combinations thereof.

The polymer of the reinforcing fibres may comprise a structural element described by structural formula 1 to 4 mixtures thereof.

Both the reinforcing fibres and the polymer device may be brought in contact with the radical initiator.

Polymers comprised by the polymer device may comprise double bonds, and they may comprise a structural element described by structural formula 1 to 4.

Bringing the polymer device in contact with the radical initiator may result in free radicals of double bonds of the polymers of the polymer device.

The radical initiator may be selected from the ones mentioned above.

The step of bringing an initiator in contact with the reinforcing fibres may form free radicals of the double bonds. Thereby the double bonds may be reactive.

The step of allowing the polymer device and the reinforcing fibres to adhere at their interface, may involve covalent linking between said double bonds and the polymer of the polymer device. The covalent linking may be combined with for example ionic bonds, dipole interactions, hydrogen bonds, or Pi-interactions.

The polymers of the polymer device may comprise a reactive group selected from the group consisting of amines, alcohols, hydroxides, peroxides, and sulphides. Said reactive groups may be involved the chemical binding. Said reactive groups may react with the double bond(s) of the polymer of the reinforcing fibres.

The step of providing reinforcing fibres may comprise providing reinforcing fibres in a form selected from the group consisting of yarn, fabric, thread, or net. Other suitable forms should also be considered according to the present invention.

According to a fourth aspect, the invention relates to a method for producing tyres of reinforced polymer material. The method according to the third aspect may be applied for this purpose.

The invention may further relate to a method for producing hoses or tubes of reinforced polymer material.

According to a fifth aspect, the present invention relates to a method for producing conveyor belts of reinforced polymer material. The method of the third aspect may be applied for this purpose.

Belts of reinforced polymer material, other than conveyer belts, may also be produced according to the invention.

The invention may further relate to a material obtainable by the methods according the invention.

The discussions above concerning one aspect of the invention may be applied to other aspects of the invention where applicable.

### Brief description of the drawings

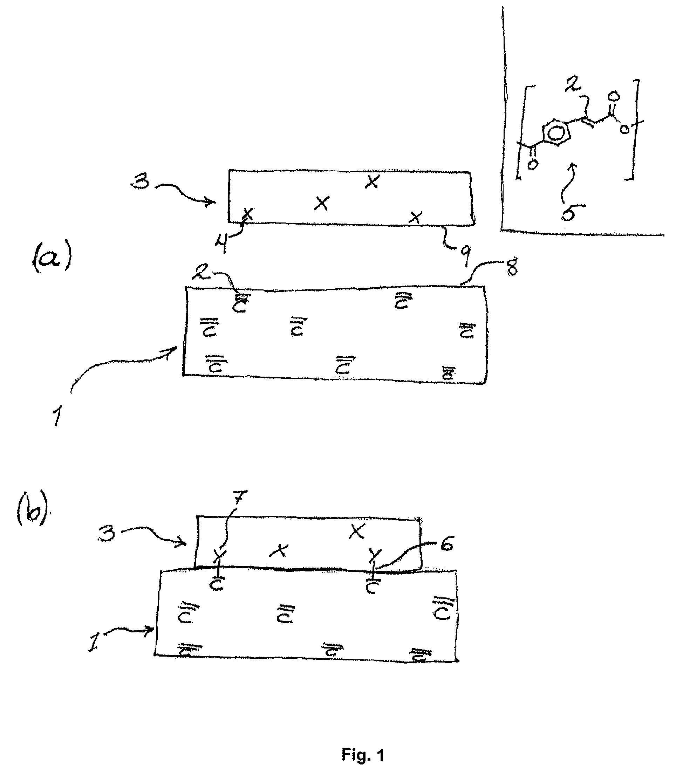

Fig. 1 illustrates schematically the adhering of two polymer materials.

### Detailed description of preferred embodiments of the invention

The invention will now be discussed in more detail and specific preferred embodiments, and variations of said preferred embodiments will be illustrated. The discussions are intended to be clarifying, and they should not, in any way, be regarded as being limiting to the scope of the present invention. The figures, which are being referred to in the discussions, are schematic and not necessarily according to scale.

With reference to figure 1, a method for adhering surfaces is discussed below. Figure 1a illustrates a first polymer material 1, with a surface 8. The polymer material is made of Polyethylene terephthalate comprising small amounts of the co-monomer 5 comprising double bonds 2 (inset). The first polymer material 1 thereby has double bonds. The co-monomer is illustrated as an inset in the upper right corner of figure 1, and by the letters "C" with lines illustrating the double bonds, in the illustration of the first polymer material 1. Figure 1a also illustrates a second polymer material 3 with a surface 9, which polymer material comprises reactive groups 4, which groups are indicated by the letter X. X may, for example, be an unsaturated vinyl group. Figure 1b illustrates the first polymer material 1, arranged in contact with the second polymer material 3. As the polymer materials are brought in contact, reactions occurs and chemical bonds 6 are formed between the comonomers 5 and the reactive groups 4, which reactive groups transforms into groups Y 7. The surfaces 8 and 9 are thus adhered and held together by the bonds 6. In this example, every double bond involved in the reaction forming the chemical bond, ceases to be a double bond and becomes two single bonds. The reactive group 4, X, is transformed in the reaction to form group Y 7.

It is realised that this example illustrates, on a principle level, one embodiment of the invention, and in reality much more than two bonds may be formed between the surfaces, for example several thousands, millions, billions or moles of bonds may be formed.

### Example 1 - Adhesion of surfaces.

The following example illustrates reinforcement of rubber, according to one embodiment of the invention.

100 kg of copolyester of 1% para formyl methylbenzoic acid was dried at 140°C with air of 20°C dew-point, for 6 hours, followed by melting and spinning with a single-screw extruder at 295°C and 40 bar pack pressure, into 400 denier monofilaments.

The spun fibres were quenched immediately after spinning. A lubricant oil was purged on the surface prior to winding. The spun fibers were woven on a Dornier machine into cord-fabric.

Lauroyl peroxide was dissolved in acetone and the fabric was passed through the solution. The catalyst remained as powder on the fabric upon evaporation of acetone. The fabric was then pressed with SBR rubber and cooked at 140°C for 30 minutes.

The obtained sandwich product was tested for tensile tests with reference of fabrics produced from standard homopolyesters, with good results.

In addition to this, the aforementioned copolyester was spun into 2000f24 and twisted and the test was repeated.

## Claims

1. A method for adhering surfaces comprising the steps of:
- bringing a first polymer material, comprising a first polymer selected from the group consisting of polyesters and polyamides, said first polymer having at least one double bond in the backbone, in contact with a second polymer material, comprising a second polymer;
- allowing a surface of the first polymer material and a surface of the second polymer material to adhere by chemical binding, in which binding said double bond(s) of the first polymer are involved.

2. Method according to claim 9, wherein the first polymer comprises a structural element described by structural formula 1.

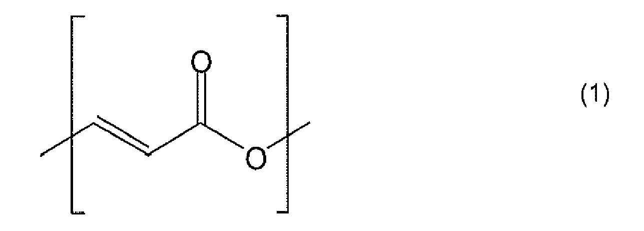

3. Method according to claim 1 or 2, wherein the first polymer comprises a structural element described by structural formula 2.

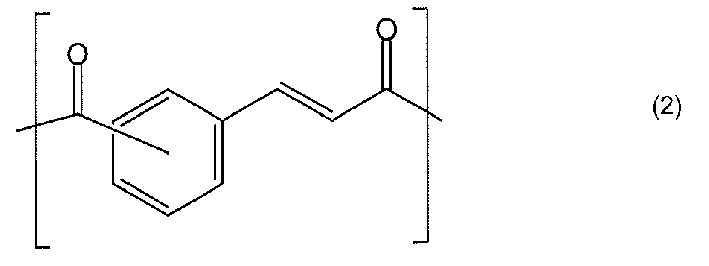

4. Method according to claim 2 or 3, wherein the structural element described by structural formula 1 or 2 is present between 0 and 20 percent by weight of the first polymer.

5. Method according to any one of the preceding claims, wherein the first polymer is made from comonomers described by the structural formula 5, wherein R₁ and R₂ may be selected independently from the group comprising H, methyl, ethyl, propyl, butyl, CH₃, C₂H₅, C₃H₇, and C₄H₉.

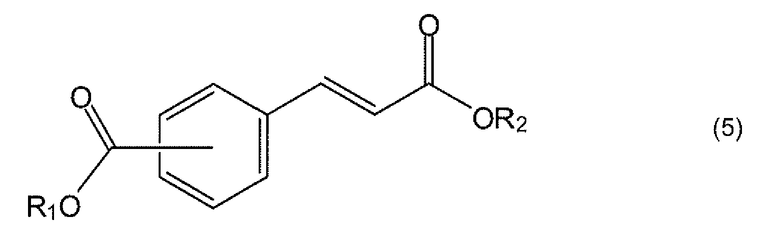

6. Method according to any one of the preceding claims, wherein the second polymer comprises a reactive group selected from the group consisting of amines, alcohols, hydroxides, peroxides, and sulphides, which reactive group is involved in said chemical binding.

7. Method according to any one of the preceding claims, wherein the chemical binding is initiated by a radical initiator, direct heat or UV light.

8. Method according to any one the preceding claims, wherein the radical initiator is arranged on at least one of the surfaces of the first polymer material and/or the second polymer material.

9. Method according to any one of the preceding claims, wherein the first polymer material is reinforcing fibres and the second polymer material is a polymer device comprising polymers selected from the group consisting of natural rubber, SBR, EPDM, acrylic rubber, butadiene rubber, butyl rubber, chlorobytyl, chlorinated polyethylene, chlorosulphonated polyethylene, epichlorhydrin, ethylene acrylic, ethylene propylene rubber, fluoroelastomers, hydrogenated nitrile rubber, isoprene rubber, nitrile rubber, perfluoro elastomers, polychloroprene, polynorbornene rubber, polysulphide rubber, polyurethande rubber, silicon rubber, fluorosilicone rubber, styrene butadiene rubber,and tetra-fluoroethylene/propylene, and combinations thereof.

10. Method according to claim 9, wherein the reinforcing fibres are in a form selected from the group consisting of yarn, fabric, thread, or net.

11. A method for producing tyres of reinforced polymer material according to any one of claims 1-10.

12. A method for producing conveyor belts of reinforced polymer material according to any one of claims 1-10.

13. Use of a polymer selected from polyesters or polyamides, comprising a structural element described by the structure 1 or 2, for adhering surfaces.

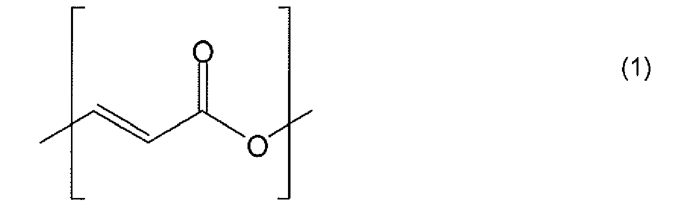

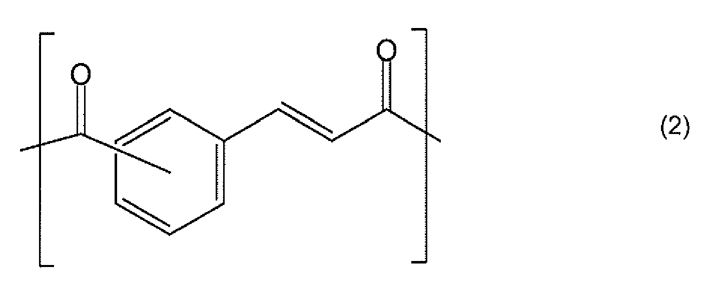

14. Use according to claim 13, for chemical binding with another polymer, which binding involves the structural element described by the structure 1 or 2, thereby adhering the polymers.

15. Material obtainable by the method according to any one of the claims 1-12.
